(19) Europäisches Patentamt
European Patent Office
Office européen des brevets

(11) **EP 3 418 644 A1**

(12) **EUROPEAN PATENT APPLICATION**

(43) Date of publication:
**26.12.2018 Bulletin 2018/52**

(51) Int Cl.:
**F24F 11/39** (2018.01)    *F24F 3/16* (2006.01)

(21) Application number: **17176895.5**

(22) Date of filing: **20.06.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Koninklijke Philips N.V.
5656 AE Eindhoven (NL)**

(72) Inventors:
• **SU, Jing
5656 AE Eindhoven (NL)**
• **ZHANG, Qiushi
5656 AE Eindhoven (NL)**
• **LOU, Vincent
5656 AE Eindhoven (NL)**

(74) Representative: **de Haan, Poul Erik et al
Philips International B.V.
Philips Intellectual Property & Standards
High Tech Campus 5
5656 AE Eindhoven (NL)**

(54) **FILTER LIFETIME ESTIMATION**

(57)    An air purifier monitoring system (10) is disclosed for monitoring an air purifier (50) including a pollutant removal structure (55) for removing a pollutant from an air-filled space housing the air purifier. The system comprises a processor (31) programmed with performance characteristics of the pollutant removal structure and with a plurality of algorithms for estimating a degree of fouling of the pollutant removal structure during an operating period of the air purifier, each of said algorithms being valid for a particular ventilation condition of the air-filled space, the processor being configured to receive a series of $CO_2$ levels detected over a period of time from a $CO_2$ sensor (23) in said air-filled space; estimate an actual ventilation condition of the air-filled space from the received series of $CO_2$ levels; select an algorithm from the plurality of algorithms based on the estimated actual ventilation condition; receive a series of pollutant levels detected over the operating period from a pollutant sensor (21) in the air-filled space; and estimate the degree of fouling of the pollutant removal structure during the operating period using the selected algorithm and the performance characteristics of the pollutant removal structure. Also disclosed are an air purifier system comprising an air purifier (50) including a pollutant removal structure (55) and the air purifier monitoring system (10) and a method of monitoring a pollutant removal performance of a pollutant removal structure (55) of an air purifier (50) located in an air-filled space.

FIG. 1

**Description**

FIELD OF THE INVENTION

The present invention relates to an air purifier monitoring system for monitoring an air purifier including a pollutant removal structure for removing a pollutant from an air-filled space housing the air purifier to estimate an end of life (EOL) of the pollutant removal structure.

The present invention further relates to an air purifier system including such an air purifier monitoring system.

The present invention further relates to a method of monitoring a pollutant removal performance of a pollutant removal structure of an air purifier located in an air-filled space.

BACKGROUND OF THE INVENTION

Air purifiers are commonplace in today's society to clean air in confined spaces, e.g. rooms, for example to reduce the exposure of people in such confined spaces to harmful or unpleasant pollutants, e.g. allergens, particles, odours, and so on. To this end, the air purifiers typically comprise one or more pollutant removal structures, such as one or more filters, catalytic converters, electrostatic precipitators, and so on. The one or more filters may include air filters such as carbon filters, HEPA filters, odour filters, anti-bacterial filters or the like. Catalytic converters may be used to break down gaseous pollutants into smaller molecules, e.g. $H_2O$ and $CO_2$. Other pollutant removal technologies employed in such purifiers are also known.

In order to control the operation of the air purifier, the air purifier may contain pollutant sensors, e.g. to regulate the air flow through the air purifier based on measured pollutant concentrations in the inbound air or to monitor the performance of the pollutant removal structures, which typically have a limited lifespan and must therefore be regularly replaced or serviced in order to ensure that the air purifier exhibits the desired performance characteristics, i.e. sufficiently purifies the air in a confined space in which the air purifier is placed, e.g. a room of a building such as an office space or a house.

However, it is not straightforward to predict when such pollutant removal structures need replacing or maintenance. Given that such pollutant removal structures, e.g. air filters, can be rather costly, it is desirable that such pollutant removal structures are not prematurely replaced or serviced as this can significantly increase the operating cost of an air purifier. On the other hand, if pollutant removal structure replacement or servicing is delayed beyond its end of life (EOL), the performance of the air purifier including the pollutant removal structure may become insufficient, which may lead to health problems for people occupying the confined space in which the air purifier is positioned. This is particularly prevalent for certain risk groups; it is well documented that pregnant women, infants/children, elderly and people with respiratory or cardiovascular disease are at increased risk from pollution exposure. For these groups, there is an enhanced need to minimize their exposure to air pollution.

Several air purifier manufacturers maintain fixed EOL values for the pollutant removal structures in the air purifier such that a user is prompted at regular intervals to replace or service such structures, for example based on a cumulative operating time of the air purifier or based on fixed intervals as recommended by the manufacturer of the air purifier. However, this approximation does not factor in environmental conditions and operating times and may therefore lead to rather inaccurate approximations of the EOL of these pollutant removal structures. For example, where such an air purifier is placed in a newly decorated room, the active carbon filter of the air purifier will be more rapidly contaminated, thus requiring an earlier replacement. Similarly, if the air purifier is used in a heavily polluted city, its particulate matter (PM) filter will need to be more frequently replaced.

US 2016/0209316 A1 discloses a method for determining the fouling ratio of at least one filter of a ventilation and/or air handling system by calculating the amount of dust retained by a filter based on its theoretical filtration capacity, collected pollution data of air passing through the filter and the air flow rate entering the ventilation system including the filter. However, such a method can be rather inaccurate where ventilation conditions of a room in which the ventilation system or air handling system is placed are varied.

SUMMARY OF THE INVENTION

The present invention seeks to provide an air purifier monitoring system for monitoring an air purifier including a pollutant removal structure for removing a pollutant from an air-filled space housing the air purifier to more accurately estimate an end of life (EOL) of the pollutant removal structure.

The present invention further relates to an air purifier system including such an air purifier monitoring system.

The present invention further relates to a method of monitoring a pollutant removal performance of a pollutant removal structure of an air purifier located in an air-filled space in order to more accurately determine the EOL of the pollutant removal structure.

According to an aspect, there is provided an air purifier monitoring system for monitoring an air purifier including a pollutant removal structure for removing a pollutant from an air-filled space housing the air purifier, the system comprising a processor programmed with performance characteristics of the pollutant removal structure and with a plurality of algorithms for estimating a degree of fouling of the pollutant removal structure during an operating period of the air purifier, each of said algorithms being valid for a particular ventilation condition of the air-filled space, the processor being configured to receive a series of $CO_2$ levels detected over a period of time from a $CO_2$ sensor in said air-filled space; estimate an actual ventilation condition of the air-filled space from the received series of $CO_2$ levels; select an algorithm from the plurality of algorithms based on the estimated actual ventilation condition; receive a series of pollutant levels detected over the operating period from a pollutant sensor in the air-filled space; and estimate the degree of fouling of the pollutant removal structure during the operating period using the selected algorithm and the performance characteristics of the pollutant removal structure.

The present invention is based on the insight that a degree of fouling of the pollutant removal structure can be accurately monitored by taking into account the ventilation conditions of the air-filled space in which the air purifier is placed. In particular, for a well-ventilated space a change in pollutant levels within the space is not necessarily (solely) the result of such pollutants being captured by the pollutant removal structure, but may at least in part be caused by such ventilation. Furthermore, the invention is based on the insight that a degree of ventilation of the air-filled space may be estimated from a change in $CO_2$ levels within the air-filled space when the space is occupied by one or more persons, due to the exhalation of $CO_2$ by these persons. More specifically, a lack of significant change in such $CO_2$ levels within the air-filled space when the space is occupied by one or more persons is indicative of the air-filled space being ventilated, as the $CO_2$ can rapidly diffuse out of the air-filled space through such ventilation, thereby preventing build-up of $CO_2$ within the air-filled space. Consequently, by providing a plurality of fouling estimation algorithms for different ventilation conditions of the air-filled space, the degree of fouling of the pollutant removal structure over a monitoring period corresponding to a specific ventilation condition of the air-filled space can be accurately monitored.

In the context of the present application, where reference is made to a degree of fouling of the pollutant removal structure, this may refer to a cumulative clean mass (CCM) collected by the pollutant removal structure. The CCM may be defined as figure of merit defining the total mass of the pollutants collected when the clean air delivery rate (CADR) of the pollutant removal structure has fallen to 50% of its initial CADR.

In a preferred embodiment, at least some of the algorithms are defined to estimate said degree of fouling based on a difference between the pollutant level within the air-filled space and an ambient pollutant level of said pollutant in a region in which the air-filled space is located, wherein the processor is further configured to receive said ambient pollutant level from a data source for providing said ambient pollutant level. This further improves the accuracy of the estimated amount of pollutant captured by the pollutant removal structure during a period of time in which the air-filled space is well-ventilated, as the portion of pollutant escaping to ambient or entering the air-filled space from ambient during this period of time can be estimated based on the ambient pollutant level received from the data source. The data source may be an external pollutant sensor communicatively coupled to the processor or alternatively may be a network service, e.g. a service provided over the Internet or a similar network, from which an actual ambient pollutant level in a particular geographical location, i.e. the geographical location of the air-filled space can be obtained.

The plurality of algorithms may include a first algorithm defined to estimate said degree of fouling based on the difference between the pollutant level within the air-filled space and the ambient pollutant level of said pollutant and a second algorithm defined to estimate said degree of fouling independent of the ambient pollutant level of said pollutant, wherein the processor may be configured to select the first algorithm if a ventilation rate of the air-filled space is below a defined threshold and to select the second algorithm if said ventilation rate at least meets the defined threshold. This is based on the insight that when the air-filled space is highly ventilated, an equilibrium exists between the indoor and outdoor pollutant levels such that net diffusion between the indoor and outdoor environments can be neglected.

The processor may be further configured to generate a control signal defining a sampling rate of the pollutant sensor based on a difference between the pollutant level within the air-filled space and the ambient pollutant level of said pollutant and to communicate said control signal to the pollutant sensor if said ventilation rate is below the defined threshold. This for example may be used to distinguish between a situation in which the ambient pollutant concentration is higher than the pollutant concentration within the air-filled space, during which a high sampling rate with the pollutant sensor may be required and a situation in which the ambient pollutant concentration is lowered and the pollutant concentration within the air-filled space, during which a lower sampling rate with the pollutant sensor may be appropriate.

In an embodiment, a volume of the air-filled space is a parameter of at least the first algorithm, wherein the processor is further configured to detect a change in the volume of the air-filled space or a change in the actual ventilation conditions of the air-filled space based on the received series of $CO_2$ levels and the received series of pollutant levels. In this manner, changes in the effective size of the space, such as by the opening or closing of a door between the air-filled space in which the air purifier is located and an adjacent air-filled space can be detected from sudden changes in the monitored $CO_2$ levels and pollutant levels and can be used to further improve the accuracy of the monitoring of the degree of fouling of the pollutant removal structure over time.

The air purifier monitoring system may further comprise a data storage device communicatively coupled to the processor, wherein the processor may be further configured to store the estimated degree of fouling in the data storage device; and determine a cumulative degree of fouling of the pollutant removal structure from the estimated degrees of fouling stored in the data storage device, each of said degrees of fouling relating to a different operating period of the air purifier, thereby maintaining a fouling history of the pollutant removal structure based on which the cumulative degree fouling of the pollutant removal structure can be estimated.

The processor may be further configured to adjust the performance characteristics of the pollutant removal structure based on the determined cumulative degree of fouling of the pollutant removal structure. For example, the single pass efficiency of the pollutant removal structure, i.e. the fraction of pollutant retained by the pollutant removal structure by a single pass of the pollutant through the pollutant removal structure may be adjusted based on the estimated degree of fouling of the pollutant removal structure in order to further improve the accuracy of the estimation of the degree of fouling of the pollutant removal structure, given that such performance characteristics of the pollutant removal structure typically degrade, e.g. linearly degrade, with increasing accumulation of the pollutant thereon.

The air purifier monitoring system may further comprise a display device communicatively coupled to the processor, wherein the processor is further configured to generate information relating to the performance of the pollutant removal structure from at least one of said estimated degrees of fouling; and operate the display device to display said generated information. This aids the user of the air purifier monitoring system in monitoring the performance of the air purifier, such that the user for example can operate the air purifier more efficiently.

The information relating to the performance of the pollutant removal structure may comprise an end-of-life indication for the pollutant removal structure such that the user can timely replace or service the pollutant removal structure.

In an embodiment, the air purifier monitoring system further comprising the pollutant sensor and the $CO_2$ sensor such that a self-contained air purifier monitoring system is provided. For example, such a self-contained air purifier monitoring system may be a sensor box or the like that may be deployed as a standalone unit within the air-filled space.

The pollutant may be any pollutant of interest. For example, the pollutant may be particulate matter, toluene or formaldehyde.

According to another aspect, there is provided an air purifier system comprising an air purifier including a pollutant removal structure and the air purifier monitoring system of any of the herein described embodiments. This therefore provides a self-contained air purifier system capable of accurately monitoring the degree of fouling of the pollutant removal structure(s) within the air purifier, from which the EOL of such pollutant removal structure(s) can be accurately estimated.

According to yet another aspect, there is provided a method of monitoring a pollutant removal performance of a pollutant removal structure of an air purifier located in an air-filled space, the method comprising providing performance characteristics of the pollutant removal structure; providing a plurality of algorithms for estimating a degree of fouling of the pollutant removal structure during an operating period of the air purifier, each of said algorithms being valid for a particular ventilation condition of the air-filled space; receiving a series of $CO_2$ levels detected over a period of time in said air-filled space; estimating an actual ventilation condition of the air-filled space from the received series of $CO_2$ levels; selecting an algorithm from the plurality of algorithms based on the estimated actual ventilation condition; receiving a series of pollutant levels detected over the operating period in the air-filled space; and estimating the degree of fouling of the pollutant removal structure during the operating period using the selected algorithm and the performance characteristics of the pollutant removal structure.

As previously explained, this method ensures the degree of fouling of such a pollutant removal structure can be accurately monitored due to the fact that ventilation conditions of the air-filled space in which the air purifier is positioned are taken into consideration when estimating the degree of fouling.

Preferably, the plurality of algorithms includes a first algorithm defined to estimate said degree of fouling based on a difference between the pollutant level within the air-filled space and an ambient pollutant level of said pollutant in a region in which the air-filled space is located and a second algorithm defined to estimate said degree of fouling independent of the ambient pollutant level of said pollutant, wherein the method further comprises receiving said ambient pollutant level from a data source for providing said ambient pollutant level; and selecting the first algorithm if a ventilation rate of the air-filled room is below a defined threshold and selecting the second algorithm if said ventilation rate at least meets the defined threshold. This further improve the accuracy of the estimation of the degree of fouling of the pollutant removal structure due to the fact that pollutant exchange between the air-filled space and the outside world are only taken into consideration where a net transfer of the monitored pollutant between the air-filled space and the outside world is likely to take place.

The method may further comprise storing the estimated degree of fouling; determining a cumulative degree of fouling of the pollutant removal structure from previously stored estimated degrees of fouling, each of said degrees of fouling relating to a different operating period of the air purifier; and generating an end-of-life indication for the pollutant removal structure from the determined cumulative degree of fouling such that a user of the air purifier can timely replace or service the monitored pollutant removal structure.

## BRIEF DESCRIPTION OF THE DRAWINGS

Embodiments of the invention are described in more detail and by way of non-limiting examples with reference to the accompanying drawings, wherein:

Fig. 1 schematically depicts an air purification arrangement including an air purifier monitoring system according to an embodiment;

Fig. 2 schematically depicts an air purification arrangement including an air purifier monitoring system according to another embodiment;

Fig. 3 schematically depicts an air purification apparatus according to yet another embodiment;

Fig. 4 is a flowchart of a method of monitoring a pollutant removal performance of a pollutant removal structure of an air purifier located in an air-filled space according to an embodiment;

Fig. 5 shows a set of graphs associated with a first ventilation condition of a room in which an air purification arrangement according to an embodiment of the present invention is placed;

Fig. 6 shows a set of graphs associated with a second ventilation condition of a room in which an air purification arrangement according to an embodiment of the present invention is placed;

Fig. 7 shows a graph depicting the relationship between the one-pass efficiency of a particle filter and the particle mass accumulated on the filter; and

Fig. 8 shows a graph depicting a particulate matter concentration over time in a room housing an air purifier in which the air purifier is periodically switched off.

## DETAILED DESCRIPTION OF THE EMBODIMENTS

It should be understood that the Figures are merely schematic and are not drawn to scale. It should also be understood that the same reference numerals are used throughout the Figures to indicate the same or similar parts.

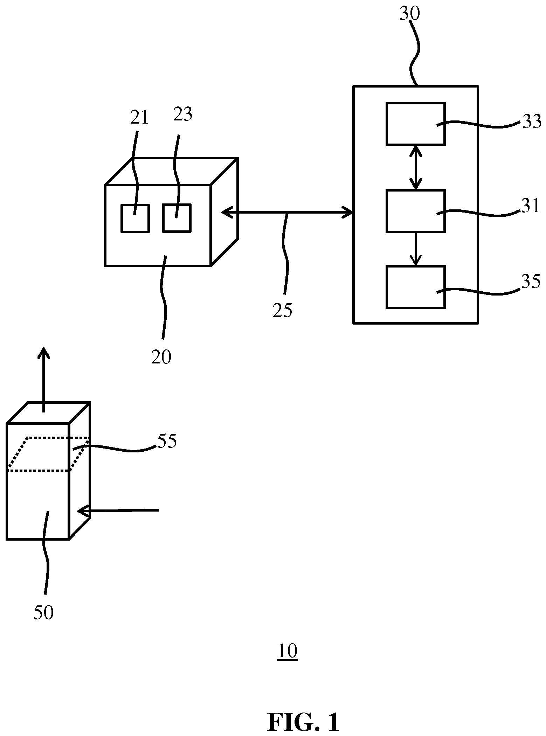

Fig. 1 schematically depicts an air purifier monitoring system 10 according to an embodiment. The air purifier monitoring system 10 is adapted to monitor the performance of one or more pollutant removal structures 55 such as air filters, catalytic converters and so on in an air purifier 50. In the context of the present application, the performance of an air filter may be expressed as the ability of the air filter to lower a concentration of a pollutant in a defined amount of time given a defined air flow through the pollutant removal structure as induced by the air purifier 50 when placed in a space such as a room of a house, office building or the like. Such air purifiers 50 are typically arranged to suck in air and pass this air through or over one or more pollutant removal structures 55 before expelling the purified air, as indicated by the ingoing and outgoing arrow respectively in Fig. 1. Such air purifiers 50 may contain any suitable type of pollutant removal structures 55, e.g. filters such as HEPA filters, carbon filters, and so on in order to remove pollutants such as particulate matter, pollen, odours, bacteria, volatile organic compounds (VOCs) such as formaldehyde and toluene, and so on from the atmosphere in the space in which such an air purifier 50 is placed.

The air purifier monitoring system 10 typically comprises a computing device 30 including a processor 31. The computing device 30 may be any suitable computing device, such as a personal computer, e.g. a desktop computer or a laptop computer, a tablet computer, a personal digital assistant, a mobile communication device such as a smartphone and so on. The computing device 30 may form an assembly with the air purifier 50. In such an assembly, the computing device 30 may be a discrete entity or may form part of the air purifier 50, i.e. the air purifier 50 may comprise the processor 31. The processor 31 may be any suitable processor, e.g. a generic processor or an application-specific processor. The computing device 30 further comprises a data storage device 33 communicatively coupled to the processor 31.

The computing device 30 is arranged to communicate with sensors 21, 23 for sensing pollutant levels in the atmosphere in the space in which the air purifier 50 is placed. Typically, the sensor 21 is arranged to sense a concentration or level of a pollutant for which the air purifier 50 comprises a pollutant removal structure 55 such as an air filter or the like arranged to remove this pollutant. For example, the sensor 21 may be a particulate matter sensor such as a PM 2.5 sensor for detecting particulate matter of a certain diameter in the atmosphere, e.g. PM2.5 or PM10, dust particles, allergens, or the like, a formaldehyde sensor, a toluene sensor, other gas sensors, and so on. The sensor 23 is a $CO_2$ sensor, which function will be explained in more detail below.

The sensors 21, 23 may be integrated in any suitable device, such as the air purifier 50, the computing device 30 or a stand-alone sensor device 20, e.g. a sensor box or the like. Stand-alone sensor devices, e.g. sensor boxes, are increasingly available for home-use and may include sensors for measuring air pollutants such as volatile organic compounds (VOCs) including formaldehyde and toluene, particulates including PM2.5 as well as environmental parameters such as relative humidity and temperature. The processor 31 may be adapted to monitor the concentration of a particular pollutant based on the sensor data provided by the sensor 21 of the sensor device 20. In an embodiment, the processor 31 may be integrated into such a stand-alone sensor device 20, i.e. the stand-alone sensor device 20 may comprise the computing device 30.

The sensors 21, 23 are communicatively coupled to the computing device 30 over a communication link 25 such that the processor 31 can receive sensor readings from such sensors. Such a communication link may be a wired communication link, e.g. in case the sensors 21, 23 are integral to the computing device 30, or may be a wireless communication link, e.g. in case the sensors 21, 23 are located in a different device to the computing device 30, e.g. in a stand-alone sensor device 20. To this end, the respective devices communicatively coupled over such a wireless communication link may include a wireless transceiver (not shown). The devices may communicate with each other through their respective wireless transceivers using any suitable wireless communication protocol, e.g. Bluetooth, Wi-Fi, a mobile communication protocol such as 2G, 3G, 4G or 5G, a suitable near-field communication (NFC) protocol or a proprietary protocol. In case of such wireless communication, the respective devices may communicate directly with each other or may communicate with each other through an intermediary such as a wireless bridge, a router, a hub, and so on. Any suitable embodiment of wired or wireless communication between such respective devices may be contemplated.

The processor 31 is further communicatively coupled to a data storage device 33, here shown to form part of the computing device 30. Such a data storage device may be any suitable device for storing digital data, e.g. a random access memory, a cache memory, a Flash memory, a solid state storage device, a magnetic storage device such as hard disk, an optical storage device and so on. Alternatively, the data storage device 33 may be separate from the computing device 30, e.g. a network storage device or a cloud storage device accessible to the processor 31 over a network such as a LAN or the Internet. The processor 31 may store sensor data received from one or more of the connected sensors 21, 23 in the data storage device in order to collect and store historical data regarding the pollutant levels of interest in the atmosphere within the space comprising the air purifier 50 from which the processor 31 may derive the pollutant removal performance of a pollutant removal structure 55 in the air purifier 50 adapted to remove the pollutant of interest from the atmosphere.

In an embodiment, the processor 31 may be adapted to store an estimated degree of fouling of the pollutant removal structure 55 in the data storage device 33 as will be explained in more detail below. In this manner, the processor 31 may update the data storage device 33 after each monitoring period in which the performance of the pollutant removal structure 55 is being monitored to build a cumulative degree of fouling of the pollutant removal structure 55 from which its EOL may be estimated. For example, the processor 31 may be programmed to determine that the pollutant removal structure 55 has reached its EOL once its cumulative degree of fouling has reached a defined threshold, e.g. a defined figure such as a CCM figure as previously explained. Similarly, the processor 31 may be adapted to estimate the EOL of the pollutant removal structure 55 based on a difference between the actual cumulative degree of fouling of the pollutant removal structure 55 and this defined figure, from which it can be estimated when the pollutant removal structure 55 reaches its EOL based on the period of time over which the pollutant removal structure 55 has reached its actual cumulative degree of fouling. As will be explained in more detail below, such an EOL estimation may be based on a performance parameter such as a single pass efficiency of the pollutant removal structure 55, which performance parameter may be a function of the degree of fouling of the pollutant removal structure 55.

In Fig. 1, the computing device 30 further comprises a sensory output device 35 under control of the processor 31. Such a sensory output device may be any device that capable of producing an output that can be detected by one of the human senses. For example, the sensory output device 35 may be adapted to produce a visible or audible output. The processor 31 may be adapted to generate a control signal indicative of an estimated EOL of a monitored pollutant removal structure 55, which control signal triggers the sensory output device 35 to produce a sensory output indicating the estimated EOL. For example, the sensory output device 35 may comprise a display and/or one or more LEDs adapted to provide an indication of the estimated EOL of a particular filter monitored by the processor 31.

As will be readily understood by the skilled person, the processor 31 may be adapted to receive sensor data from a plurality of sensors 21 each associated with different pollutant of interest, with the processor 31 adapted to (simultaneously) monitor the respective concentration levels of different pollutants of interest from the sensor data received from the multiple sensors in the sensor device 20.

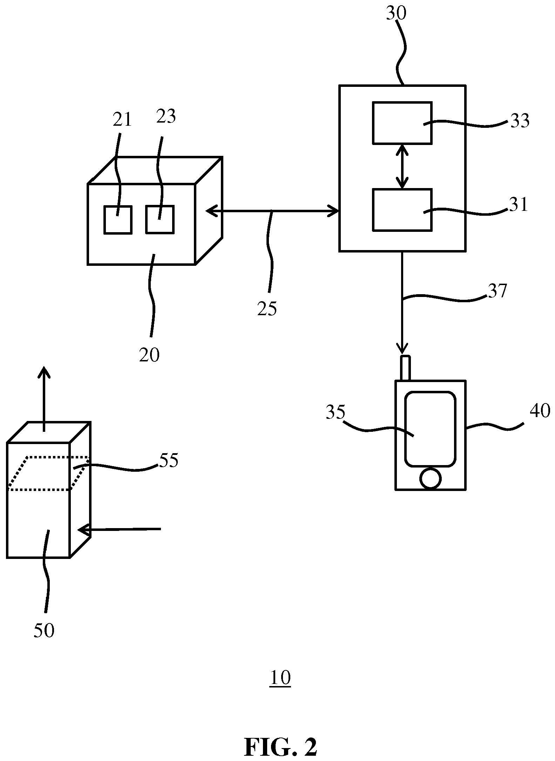

In the above embodiment, the sensory output device 35 forms part of the computing device 30, e.g. may be an integral part of the computing device 30 or may be attached to the computing device 30, e.g. a monitor or loudspeaker attached to the computing device 30. In an alternative arrangement schematically depicted in Fig. 2, the sensory output device 35 may form part of a mobile communication device 40, with the computing device 30 adapted to communicate with the mobile communication device over a wireless communication link, e.g. using any of the aforementioned wireless communication protocols. In this embodiment, a user may be kept informed of the estimated EOL of one or more of the pollutant removal structures 55 in the air purifier 50 even when not in direct vicinity of the computing device 30, e.g. when being in a different room or being outside the building comprising the air purifier 50. Any suitable mobile communication device 40, e.g. a smart phone, tablet computer, personal digital assistant, and so on, may be used for this purpose. As will be readily understood by the skilled person, the mobile communication device 40 may be configured with a software application program, e.g. an app, to interact with the computing device 30 as described above.

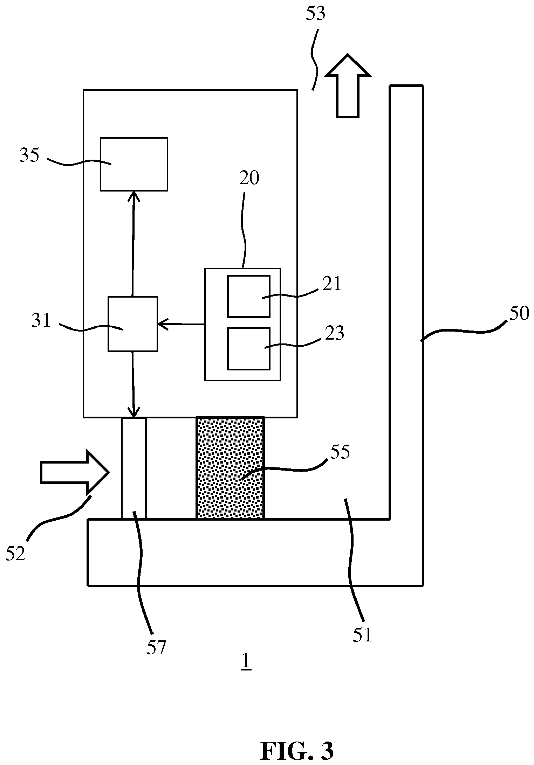

In yet another embodiment, the pollutant sensor(s) 21 and the $CO_2$ sensor 23, as well as the processor 31 and the sensory output device 35 are integrated in the air purifier 50, thereby forming an air purifier system 1 according to an embodiment of the present invention. This is schematically depicted in Fig. 3, in which the pollutant removal structure 55 is depicted between an inlet 52 and an outlet 53 of an air flow channel 51 of the air purifier 50. An air displacement device 57, e.g. a fan or the like, here shown under control of the processor 31 by way of non-limiting example, is typically included to force an air flow through the air flow channel 51 from the inlet 52 to the outlet 53 as indicated by the block arrows such that the air flow is forced through the pollutant removal structure 55 to purify the air flow.

It will be readily understood by the skilled person that such an air purifier 50 may comprise a plurality of different pollutant removal structures 55 for removing different types of pollutants from the air flow, with each of these pollutant removal structures 55 being monitored by the air purifier monitoring system 10 according to embodiments of the present invention such that the EOL of each of these pollutant removal structures 55 may be independently estimated. In such a scenario, it will be understood that the processor 31 of the air purifier monitoring system 10 typically is adapted to receive respective series of pollutant levels for each of these pollutants from sensors arranged to monitor the respective pollutant levels in the air-filled space in which the air purifier 50 is positioned.

In an alternative embodiment (not shown), the air purifier 50 may comprise the processor 31 but the one or more pollutant sensors 21 and the $CO_2$ sensor 23 may be external to the air purifier 50, in which case the processor 31 may receive the sensor readings from the sensors 21, 23 via a communication link as previously explained. In such an embodiment, the air purifier 50 may further comprise the sensory output device 35 or alternatively may be arranged to communicate data from the processor 31 to a remote sensory output device 35, e.g. forming part of a portable device 40, as previously explained.

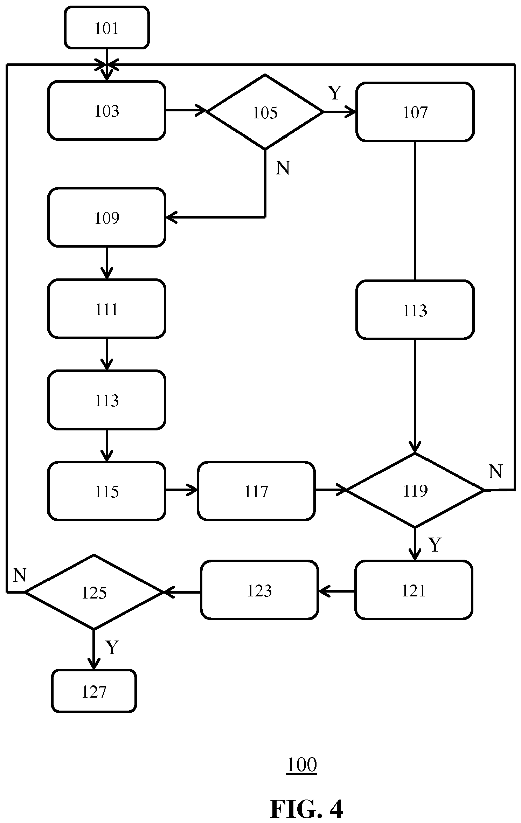

The processor 31 of the air purifier monitoring system 10 according to embodiments of the present invention is adapted to implement a monitoring method 100, an example embodiment of which is schematically depicted by the flowchart of Fig. 4. In accordance with this method 100, the processor 31 is adapted to implement a plurality of algorithms for estimating a degree of fouling of a pollutant removal structure 55 of interest of the air purifier 50 over a monitoring period, e.g. a continuous on-time of the air purifier 50 or a continuous period of time during which the fouling of the pollutant removal structure 55 may be estimated by a particular one of these algorithms.

Each algorithm corresponds to a particular ventilation condition of the air-filled space, e.g. a room or the like, in which the air purifier 50 is placed. Typically, the plurality of algorithms includes at least one algorithm in which ventilation between the air-filled space and the outside world is taken into consideration and at least one algorithm in which such ventilation is ignored. The processor 31 may be adapted to select an algorithm in which ventilation between the air-filled space and the outside world is taken into consideration if it is determined that a ventilation rate of the air-filled space is below a defined threshold. In such a scenario, rate of diffusion of the pollutant of interest between the air-filled space and the outside world is typically slow compared to the removal rate of the pollutant of interest from the air-filled space such that the degree of fouling of the pollutant removal structure 55 by the pollutant of interest during operation of the air purifier 50 typically is a function of the single pass efficiency of the pollutant removal structure 55 and the net diffusion of the pollutant of interest between the air-filled space and the outside world.

On the other hand, if a ventilation rate of the air-filled space at least meets the defined threshold, the rate of diffusion of the pollutant of interest between the air-filled space and the outside world is typically high compared to the removal rate of the pollutant of interest from the air-filled space such that the concentration of the pollutant of interest in the air-filled space is dominated by its ventilation, i.e. typically is more or less constant, such that the amount of pollutant of interest removed by the pollutant removal structure 55 typically is governed by its single pass efficiency such that the algorithm for estimating this amount may ignore contributions to changes in a concentration of the pollutant of interest within the air-filled space due to ventilation.

Equation 1 gives an example of an algorithm in which in which ventilation between the air-filled space and the outside world is taken into consideration:

$$\sum \left[ (Ct - Ct_1) + (C_{amb} - Ct_1) * \left( 1 - e^{\left( -\frac{Q}{V} \right)\Delta t} \right) \right] * V \qquad (1)$$

In Equation 1, Ct is the concentration of the pollutant of interest (in mg/m³) within the air-filled space at the start of the operational period of the air purifier 50, $Ct_1$ is the concentration of the pollutant of interest (in mg/m³) within the air-filled space measured after a period $\Delta t$ (i.e. at point in time $t_1$) from the initial point in time during which the air purifier 50 has been operational, $C_{amb}$ is the ambient concentration of the pollutant of interest (in mg/m³) in the outside world, Q is a rate of ventilation (in m³/h) between the air-filled space and the outside world and V is the volume (in m³) of the air-filled space. As will be appreciated by the skilled person, equation (1) expresses the summation of all monitoring periods $\Delta t$ in which the degree of fouling of the pollutant removal structure 55 is approximated by the expression within the summation.

In an embodiment in which the air purifier 50 is operated in a continuous mode, when a sudden increase of a pollutant level is detected with the pollutant sensor 21, this typically is indicative of a household activity such as cooking, smoking or the like. In such a scenario, the increased level of the pollutant should be used as Ct in Equation 1.

In an embodiment, the processor 31 is adapted to calculate the volume V of the air-filled space in a calibration mode of the air purifier monitoring system 10. During such a calibration mode, the air-filled space is hermetically sealed such that the rate of ventilation Q is negligible. The volume V may then be obtained from a pollutant decay rate derived from the sensor data provided by the one or more pollutant sensors 21. For example, the processor 31 may be provided with the purification capabilities of the air purifier 50, i.e. with the purification capabilities of a pollutant removal structure 55 in the air purifier 50, which purification capabilities may be expressed in terms of a reference pollutant decay rate for a unit volume ($V_{ref}$), e.g. 100 ppm per minute for a room volume of 10 $m^3$. The actual room volume may then be determined in any suitable manner, e.g. by determining an actual decay rate and extrapolating the actual decay rate based on the reference decay rate to find the actual room volume ($V_{actual}$) as per equation (2):

$$V_{actual} = (\text{reference decay rate/actual decay rate}) * V_{ref} \qquad (2)$$

The determination of the actual room volume $V_{actual}$ in some embodiments may be performed upon replacement of a pollutant removal structure of the air purifier 50, which has the advantage that the pollutant capture capabilities of the pollutant removal structure are well-defined, because the pollutant removal structure is not yet contaminated with captured pollutants. However, in alternative embodiments the actual pollutant removal capabilities of such a pollutant removal structure may be tracked, e.g. by evaluating historical pollutant decay rate data stored in data storage device 33, from which an expression of a reduction in pollutant capturing capabilities may be derived as per equation (3):

$$\text{Filter efficiency (FE)} = \text{actual decay rate/maximum decay rate} \qquad (3)$$

In this equation, the maximum decay rate in the same room volume may be found by evaluating the historical data in the data storage device 33. The determined filter efficiency may be used to scale the reference decay rate in order to find the actual room volume as per equation (4):

$$V_{actual} = (\text{FE*reference decay rate/actual decay rate}) * V_{ref} \qquad (4)$$

It is noted that in equation (2) the actual decay rate equals the maximum decay rate of a pollutant removal structure because the actual room volume is determined with a new pollutant removal structure (i.e. having maximum pollutant capturing capability) such that the scaling of the reference decay rate is unnecessary.

Alternatively, the room volume may be derived from a monitored indoor particle (pollutant) concentration, which obeys equation 5 based on the mass conservation law:

$$\frac{dC}{dt} = k_v P_p C_{out} - (k_0 + k_v)C - \frac{CADR}{V} * C \qquad (5)$$

In the formula:

C Indoor particle concentration, mg/$m^3$;
$P_p$ Penetration coefficient of particles from the outside world into the air-filled space housing the air purifier 50, this coefficient typically is around 0.8 in an average domestic dwelling;
$C_{out}$ Outdoor particle concentration, mg/$m^3$, which may be obtained as explained in the present application;
$k_0$ Particle natural sedimentation rate, $h^{-1}$, normally around 0.2 $h^{-1}$;
$k_v$ Air changing rate, $h^{-1}$;
V Room volume, $m^3$;
CADR Clean air delivery rate, $m^3$/h.

A typical CADR curve may be recorded by a sensor 21, e.g. may be expressed using a linear scale on the y-axis of a plot depicting the CADR curve. The recorded CADR curve can be expressed by equation (6):

$$C = m * e^{-kt} \qquad (6)$$

*k* is thus the exponential decay constant in respect of the concentration curve.

By combining equations (5) and (6), the following equation (7) is obtained:

$$\frac{dC}{dt} = -km * e^{-kt} = k_v P_p C_{out} - (k_0 + k_v)C - \frac{CADR}{V} * C \qquad (7)$$

By substituting $-km * e^{-kt} = -kC$, equation (8) may be obtained as follows:

$$\left(\frac{CADR}{V} - k + k_0 + k_v\right) * C = k_v P_p C_{out}$$

$$\frac{CADR}{V} = \frac{k_v P_p C_{out}}{C} + k - k_0 - k_v$$

$$\frac{CADR}{V_0} = \frac{0.8 k_v C_{out}}{C} + k - k_v - 0.2 \qquad (8)$$

The initial CADR may be used to calculate the room volume $V_0$, i.e. the volume V of the air-filled space housing the air purifier 50. This room volume for instance may be obtained when the air purifier 50 is operated for the first time in the hermetically sealed room as previously explained.

In an alternative embodiment, the air purification monitoring system 10 may comprise a user interface, e.g. as part of the sensor device 20, the computing device 30 or the air purifier 50 that allows a user to specify a room volume of the room in which the air purifier 50 is installed. The user interface may be communicatively coupled to the processor 31 such that the user-specified room volume may be communicated to the processor 31. The processor 31 may be adapted to store the calculated or user-defined room volume in the data storage device 33 for future use. Other suitable ways of obtaining the room volume may be applied instead.

The processor 31 may be adapted to estimate the natural rate of ventilation Q based on changes in the $CO_2$ concentration or any other suitable gaseous compound, e.g. volatile organic compounds (VOCs), within the air-filled space housing the air purifier 50 when one or more persons are present in the air-filled space and the air purifier 50 is switched off. Specifically, as such persons exhale $CO_2$, the level of $CO_2$ within the air-filled space should increase in accordance with the number of people within the air-filled space and its volume. Deviations from such expected increase, i.e. a smaller increase in $CO_2$ levels over time than expected, can be attributed to ventilation between the air-filled space and the outside world. For example, the processor 31 may be adapted to estimate the rate of ventilation Q in accordance with equation (9):

$$Croom(t) = \left(Croom(t=0) - \frac{C_{outdoor} * Q + S}{Q}\right) * e^{\frac{Q}{-V}\Delta t} + \frac{C_{outdoor} * Q + S}{Q} \qquad (9)$$

In equation (9), Croom(t) is the $CO_2$ concentration in the air-filled space (in $g/m^3$) at a point in time t, i.e. a period of time $\Delta t$ (in hours) after start of the monitoring period at t=0, $C_{outdoor}$ is the ambient $CO_2$ concentration (in $g/m^3$) in the outside world in ventilation with the air-filled space, and S is the $CO_2$ source strength (in $g/m^3$) within the air-filled space. The $CO_2$ source strength of an individual (Si) typically is within a given range (e.g. within a range of 0.16-0.33 1/min for an adult). The processor 31 may calculate the source strength S based on a determined number N of individuals within the air-filled space, e.g. $S = N*S_i$. The number N of individuals within the air-filled space may be determined in any suitable manner, e.g. the number N may be specified by a user through a user interface of the air purifier monitoring system 10 or alternatively the air purifier monitoring system 10 may comprise one or more sensors (not shown), e.g. motion detection sensors or the like, for detecting the presence of individuals within the air-filled space.

Equation 10 gives an example of an algorithm in which the contribution of ventilation between the air-filled space and the outside world to the fouling of the pollutant removal structure 55 is not considered:

$$\int C_{ti} * \eta_i * \Phi * \mathrm{d}t \qquad (10)$$

In equation (10), $C_{ti}$ is the concentration of the pollutant of interest (in μg/m3) within the air-filled space at the start of the operational period and is measured by the sensor 21, $\Phi$ is the air flow rate through the air purifier 50 as recorded by the air purifier 50 and communicated to the processor 31 (over a communication link between the air purifier 50 and the processor 31 is the processor 31 does not form part of the air purifier 50), $\eta_i$ is the initial single pass efficiency of the pollutant removal structure 55 and $\Delta t$ is the monitoring period of the performance of the pollutant removal structure 55, i.e. of the operational period of the air purifier 50. As previously explained, in this equation the concentration of the pollutant of interest is considered constant as a result of the high degree of ventilation between the air-filled space housing the air purifier 50 and the outside world. For the avoidance of doubt, it is noted that equation (10) expresses an integration over each monitoring period dt during which the ventilation between the air-filled space in which the air purifier 50 is housed and the outside world is ignored.

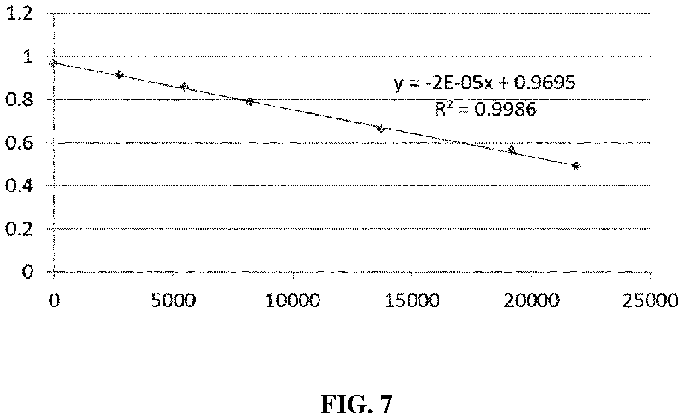

As previously explained, equation (10) may be updated in accordance with an estimated cumulative degree of fouling of the pollutant removal structure 55, in particular the single pass efficiency $\eta$ of the pollutant removal structure 55 may be adjusted in accordance with the estimated cumulative degree of fouling of the pollutant removal structure 55. This is schematically depicted in Fig. 7, in which the single pass efficiency of a particulate matter filter (Y-axis) is depicted as a function of the amount of particulate matter (in mg, X-axis) accumulated on the particular matter filter. As can be seen from the calculated correlation $R^2$ between the single pass efficiency of the filter and the amount of particulate matter accumulated on the filter, a linear relationship exists between the single pass efficiency of the filter and the amount of particular matter accumulated thereon. The processor 31 may therefore be adapted to adjust the single pass efficiency of the pollutant removal structure 55 in equation (10) based on the estimated cumulative degree of fouling, i.e. the total amount (mass) of pollutant accumulated, of the pollutant removal structure 55.

In equation 10, an integration function provides the degree of fouling of the pollutant removal structure 55. This typically requires a high sampling rate of the pollutant sensor 21 in order to obtain an accurate estimate of this degree of fouling. Alternatively, equation (10) may be replaced by equation (10a) below:

$$\sum \frac{C_t + C_{ti}}{2} * \eta_i * \Phi_i * \Delta t \qquad (10a)$$

In equation 10a, a plurality of averages of the pollutant concentration each taken over a sample window $\Delta t$ is summed, e.g. a sample window of 5 minutes or less to estimate the degree of fouling of the pollutant removal structure 55, which facilitates the use of relatively low cost pollutant sensors incapable of the high sampling rate required for Equation (10). This also allows for the flow rate of the air purifier 50 to change during the sampling as the initial air flow rate $\Phi i$ of the air purifier 50 may be updated after each sampling period.

In an embodiment, the processor 31 is adapted to select the actual single pass efficiency as a function of the determined cumulative degree of fouling of the pollutant removal structure 55 from a lookup table or the like stored in the data storage device 33. Such a lookup table may comprise a plurality of entries, each defining a cumulative degree of fouling range and a single pass efficiency for that range, such that processor 31 may retrieve the single pass efficiency to be used by identifying the cumulative degree of fouling range in the lookup table comprising the determined cumulative degree of fouling and retrieving the single pass efficiency in the identified lookup table entry.

The processor 31 may be adapted to estimate the cumulative degree of fouling by summing the respective degrees of fouling obtained during the respective monitoring periods of the performance of the air purifier 50, which respective monitoring periods typically correspond to respective periods during which the air purifier 50 was switched on. For example, the cumulative degree of fouling may be expressed by equation (11) in terms of CCM (i.e. the total mass accumulated on the pollutant removal structure 55), i.e. as the sum of equations (1) and (10):

$$CCM = \sum \left| (Ct - Ct_1) + (C_{amb} - Ct_1) * (1 - e^{\left(-\frac{Q}{V}\right)\Delta t} \right| * V + \int C_{ti} * \eta_i * \Phi * \mathrm{d}t \quad (11)$$

As will be understood from the foregoing, an equivalent to equation 11 may be used by replacing equation (10) in equation (11) with equation (10a) as described in more detail above.

Now, upon returning to Fig. 4, the method 100 as implemented by the processor 31 may start in operation 101. This may include enabling the processor 31 to implement the method 100. As previously explained, the processor 31 and/or the sensors 21, 23 may form part of the air purifier 50 or may form part of one or more separate devices.

In operation 103, the processor 31 determines the natural rate of ventilation Q between the air-filled space housing the air purifier 50 and the outside world based on a series of sensor signals received from the $CO_2$ sensor 23, as the trend in the $CO_2$ concentration in the air-filled space can be used to determine the natural rate of ventilation Q, i.e. the rate of ventilation when the air purifier 50 is switched off, as has been explained in more detail above with the aid of equation (9). It should be understood that equation (9) is provided by way of non-limiting example only and that other equations from which the rate of ventilation Q can be derived based on such trends in $CO_2$ may also be used. The processor 31 may obtain the ambient $CO_2$ concentration for determining the rate of ventilation Q in any suitable manner, e.g. from a further $CO_2$ sensor placed in the outside world or from a service over a network such as the Internet providing (real-time) information about $CO_2$ concentrations in regions of interest including the region in which the air-filled space is located. The processor 31 may obtain the ambient $CO_2$ concentration at any suitable point in time, e.g. in operation 101 or 103. Alternatively, the natural ventilation rate Q may be determined by monitoring other gaseous compounds generated by persons within the air-filled space, e.g. volatile organic compounds.

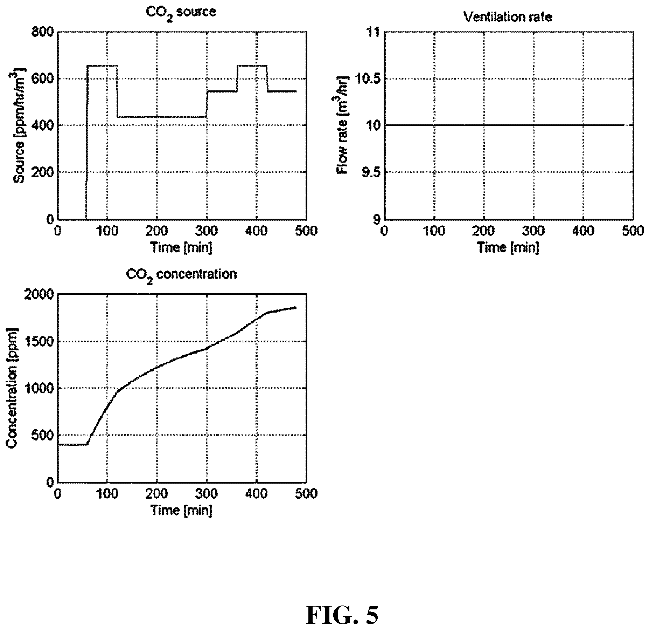

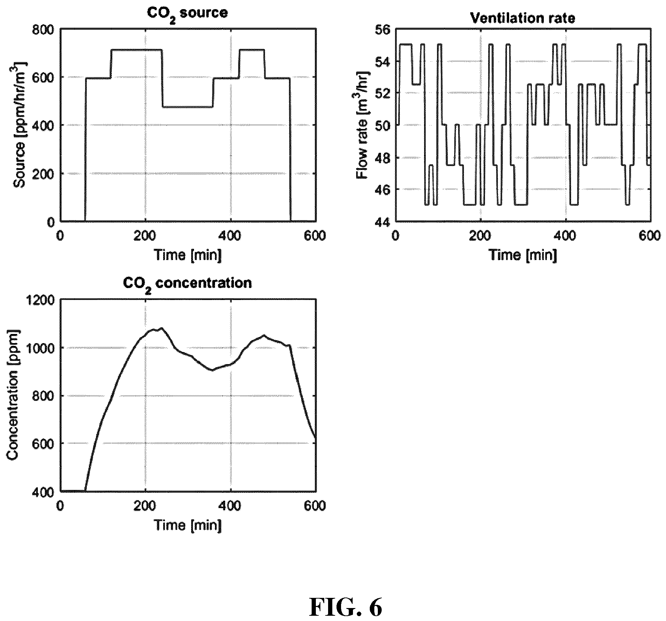

In operation 105 the processor 31 compares the natural rate of ventilation Q as determined in operation 103 against a defined threshold to decide which algorithm for estimating the degree of fouling of the pollutant removal structure 55 being monitored should be selected, i.e. whether ventilation between the air-filled space housing the air purifier 50 and the outside world should be taken into consideration. As previously explained, where the natural rate of ventilation Q is below such a defined threshold, the rate of ventilation is considered low relative to the rate at which the pollutant removal structure 55 removes the pollutant from the air-filled space, in which case ventilation should be taken into account when estimating the degree of fouling of the pollutant removal structure 55, in which case the processor 31 selects an algorithm, e.g. the algorithm of equation (1), including the natural rate of ventilation Q as a parameter in operation 109. If on the other hand the natural rate of ventilation Q at least meets the defined threshold, the processor 31 selects an algorithm, e.g. the algorithm of equation (10), without the natural rate of ventilation Q as a parameter in operation 107. Fig. 5 and Fig. 6 each depict a plurality of graphs including a graph depicting the $CO_2$ source strength S (top left), natural ventilation rate Q (top right) and $CO_2$ concentration Croom (t) (bottom left) as a function of time. In Fig. 5 the air-filled space exhibits a low rate of ventilation whereas in Fig. 6 the air-filled space exhibits a high rate of ventilation, as evidenced by the high degree of fluctuations in the natural ventilation rate Q due to changes in ambient conditions such as wind conditions. This leads to noticeable differences in the build-up of $CO_2$ within the air-filled space, which may be used to select the appropriate algorithm as previously explained.

When selecting the algorithm of including the natural rate of ventilation Q as a parameter in operation 109, the method 100 proceeds to operation 111 in which the ambient concentration of the pollutant of interest is obtained, e.g. from a further pollutant sensor placed in the outside world or from a service over a network such as the Internet providing (real-time) information about pollutant concentrations in regions of interest including the region in which the air-filled space is located. It should be understood that alternatively the processor 31 may obtain such an ambient concentration of the pollutant of interest at any other suitable point in time, e.g. in operation 101.

In operation 113, the processor 31 receives one or more sensor readings from the pollutant sensor 21, e.g. a particulate matter sensor, a volatile organic compound sensor such as a formaldehyde sensor or a toluene sensor, and so on, from which the initial concentration of the pollutant of interest at the start of the operation of the air purifier 50 is determined. This initial concentration may be used as a constant in the algorithm selected in operation 107, i.e. in case the air-filled space is highly ventilated, or may be used to determine a difference between the pollutant concentration in the air-filled space and the ambient pollutant concentration in order to determine a sampling rate with the pollutant sensor 21 in operation 115 as previously explained. Specifically, a higher sampling rate may be selected when the ambient pollutant concentration is higher than the pollutant concentration in the air-filled space, e.g. a sampling rate of once per minute, whereas a lower sampling rate may be selected when the ambient pollutant concentration is lower than the pollutant concentration in the air-filled space, e.g. a sampling rate of once per five minutes. The processor 31 typically controls the pollutant sensor 21 in accordance with the determined sampling rate, e.g. communicates the determined sampling rate to the pollutant sensor 21 over a communications link where the processor 31 and the pollutant sensor 21 are located in separate entities.

In operation 117, the processor 31 receives a series of sensor readings from the pollutant sensor 21 at the set sampling rate from which the processor 31 can determine the degree of fouling in accordance with e.g. equation (1) as previously explained. In an embodiment, the processor 31 is adapted to update the cumulative degree of fouling of the pollutant removal structure 55, e.g. using equation (11) based on the monitored changes in the pollutant concentration in the air-filled space as derived from the series of sensor readings received from the pollutant sensor 21. Alternatively, the processor 31 may temporarily store the sensor readings in the data storage device 33 for processing at a later stage.

During operation 117 the processor 31 may further receive a series of sensor readings from the $CO_2$ sensor 23, e.g. in order to monitor changes in the $CO_2$ levels within the air-filled space, as such changes may be indicative of changes in the volume of the air-filled space, e.g. by a door or the like between the air-filled space and an adjacent space being opened or closed or a change in ventilation conditions between the air-filled space and the outside world. A change in the volume or ventilation conditions of the air-filled space can be detected by a sudden change in the pollutant levels and/or $CO_2$ levels (or levels of other pollutants monitored to determine the occupancy rate of the air-filled space as previously explained). For example, where the processor 31 detects a sudden change in pollutant concentration and $CO_2$ concentration, this may be indicative of a change in the volume of the air-filled space or a change in the ventilation conditions of the air-filled space.

The processor 31 may distinguish between a change in volume and a change in ventilation conditions in the following manner. In case of a change in volume of the air-filled space, after the initial sudden change in monitored pollutant and $CO_2$ levels, these levels will gradually decrease until an equilibrium is reached between the two connected spaces. In such a scenario, the $CO_2$ levels typically remain higher than the typical ambient $CO_2$ levels of about 400 ppm. In case of a change in ventilation conditions, the $CO_2$ level in the air-filled space will rapidly equilibrate with ambient $CO_2$ levels, i.e. reach levels of about 400 ppm.

In operation 119 it is checked whether the monitoring of the degree of fouling of the pollutant removal structure should be adjusted or terminated, e.g. because of a change in the volume and/or ventilation conditions of the air-filled space housing the air purifier 50 or because the monitoring period has ended, e.g. because the air purifier 50 has been switched off or because a defined period of time has lapsed. If the monitoring period has not ended but the change in volume of the air-filled space has been detected, the method 100 may revert back to operation 103 in which the volume of the air-filled space is adjusted. The new volume may have been previously determined by the processor 31, for example based on a user-specified estimation of the total volume of the air-filled space and its adjacent space when a door or the like between the respective spaces has been opened. At this point, the processor 31 may further reassess the natural rate of ventilation Q between the air-filled space and the outside world to determine whether the previously selected algorithm is still applicable, e.g. to select another algorithm if this rate of ventilation has changed.

If it is determined in operation 119 that the monitoring period of the performance of the pollutant removal structure 55 within the air purifier 50 is to be terminated, the method 100 may proceed to operation 121 in which the cumulative degree of fouling of the pollutant removal structure 55 may be calculated, for example if such calculation was not performed in operation 117 or if the ventilation-independent algorithm was chosen in operation 107. Based on the cumulative degree of fouling of the pollutant removal structure 55, the processor 31 may further calculate an estimated EOL of the pollutant removal structure 55, for example based on a linear relationship between the cumulative degree of fouling of the pollutant removal structure 55 and its single pass efficiency as previously explained with the aid of Fig. 7 or based on a difference between the cumulative degree of fouling as calculated by the processor 31 and a defined degree of fouling, e.g. a CCM, indicative of the amount of fouling at which point the pollutant removal structure 55 needs replacing or servicing. For example, the processor 31 may calculate an estimated future point in time at which the pollutant removal structure 55 needs replacing or servicing based on the period of time over which the pollutant removal structure 55 reached its cumulative degree of fouling and the difference between its cumulative degree of fouling and the defined degree of fouling at which the pollutant removal structure 55 needs to be replaced or serviced.

In operation 123, the processor 31 may control the sensory output device 35 to produce a sensory output indicative of the performance of the pollutant removal structure 55. This for example may be an indication on a display device of the actual cumulative degree of fouling of the pollutant removal structure 55, its estimated EOL, and so on. As will be readily understood by the skilled person, the processor 31 may further control such a display device to display other relevant data, such as other performance characteristics of the air purifier 50, monitored pollutant levels, monitored $CO_2$ levels, and so on. It is further noted that the sensory output device 35 is not limited to a display device but alternatively may be an arrangement of LEDs indicating a cumulative degree of fouling of the pollutant removal structure 55 and/or its EOL, loudspeaker or the like for generating an audible warning signal if the pollutant removal structure 55 has reached its EOL, and so on. It should furthermore be understood that any combination of such sensory output devices may also be used.

In operation 125, it may be decided if another monitoring period of the performance of the pollutant removal structure 55 should be started. If this is the case, the method 100 may revert back to operation 103, otherwise the method may terminate in operation 127.

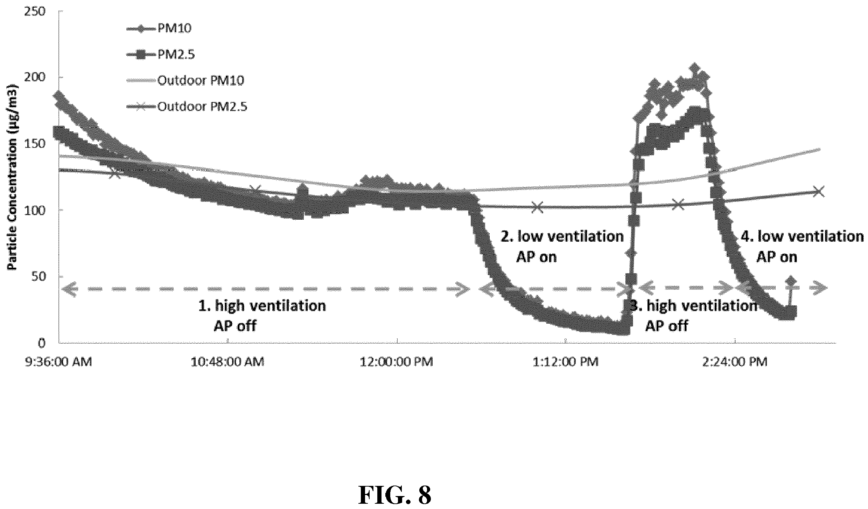

Fig. 8 depicts a graph showing ambient levels of PM2.5 and PM10 particulate matter, e.g. as provided by an Internet service, and monitored indoor levels of PM2.5 and PM10 particulate matter in an air-filled space housing the air purifier 50 over time, as a proof of concept. The ambient air is highly polluted with such particulate matter, having ambient concentrations in excess of 100 $\mu g/m^3$. The air-filled space has an estimated volume of 92.35$m^3$. The following data is collected in the air-filled space. The air purifier is switched on twice in a period from 9:00 am to 3:00 pm, during which period a natural ventilation rate Q is measured at 38.23 $m^3$/h. During the first running period of the air purifier 50 from 1:00 to 1:30 pm, the outdoor particle concentration is same as indoor particle concentration. During this time period, particle mass captured on the pollutant removal structure 55 was estimated based on Equation (1) using 1 minute intervals between sensor readings of the pollutant sensor 21, leading to a total amount of fouling of the pollutant removal structure 55 of 11.05 mg based on PM2.5 data. In contrast, without considering the natural rate of ventilation Q, the estimated total amount of particulate matter collected by the pollutant removal structure 55 would be 9.6 mg, i.e. a 13.1 % deviation from the more accurate estimation. Similarly, for the second operating period of the air purifier 50 from 2:10 to 2:48 pm, the particle mass captured on the pollutant removal structure 55 during this period based on equation (1) is 14.88 mg, whereas without taking natural ventilation into consideration this would have been only 13.73 mg, i.e. a 7.68% underestimation. This therefore clearly demonstrates that by factoring in ventilation between an enclosed space in which the air purifier 50 is positioned and the outside world when appropriate, the accuracy in estimating the amount of pollutant captured by the pollutant removal structure 55 is improved, such that its EOL can be more accurately predicted.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

**Claims**

1. An air purifier monitoring system (10) for monitoring an air purifier (50) including a pollutant removal structure (55) for removing a pollutant from an air-filled space housing the air purifier, the system comprising a processor (31) programmed with performance characteristics of the pollutant removal structure and with a plurality of algorithms for estimating a degree of fouling of the pollutant removal structure during an operating period of the air purifier, each of said algorithms being valid for a particular ventilation condition of the air-filled space, the processor being configured to:

   receive a series of $CO_2$ levels detected over a period of time from a $CO_2$ sensor (23) in said air-filled space;
   estimate an actual ventilation condition of the air-filled space from the received series of $CO_2$ levels;
   select an algorithm from the plurality of algorithms based on the estimated actual ventilation condition;
   receive a series of pollutant levels detected over the operating period from a pollutant sensor (21) in the air-filled space; and
   estimate the degree of fouling of the pollutant removal structure during the operating period using the selected algorithm and the performance characteristics of the pollutant removal structure.

2. The air purifier monitoring system (10) of claim 1, wherein at least some of the algorithms are defined to estimate said degree of fouling based on a difference between the pollutant level within the air-filled space and an ambient pollutant level of said pollutant in a region in which the air-filled space is located, wherein the processor (31) is further configured to receive said ambient pollutant level from a data source for providing said ambient pollutant level.

3. The air purifier monitoring system (10) of claim 2, wherein the plurality of algorithms includes a first algorithm defined to estimate said degree of fouling based on the difference between the pollutant level within the air-filled space and the ambient pollutant level of said pollutant and a second algorithm defined to estimate said degree of fouling independent of the ambient pollutant level of said pollutant, wherein the processor (31) is configured to select the first algorithm if a ventilation rate of the air-filled room is below a defined threshold and to select the second algorithm if said ventilation rate at least meets the defined threshold.

4. The air purifier monitoring system (10) of claim 3, wherein the processor (31) is further configured to generate a control signal defining a sampling rate of the pollutant sensor (21) based on a difference between the pollutant level within the air-filled space and the ambient pollutant level of said pollutant and to communicate said control signal to the pollutant sensor if said ventilation rate is below the defined threshold.

5. The air purifier monitoring system (10) of claim 3, wherein a volume of the air-filled space is a parameter of at least the first algorithm, wherein the processor (31) is further configured to detect a change in the volume of the air-filled space or a change in the actual ventilation conditions of the air-filled space based on the received series of $CO_2$

levels and the received series of pollutant levels.

6. The air purifier monitoring system (10) of claim 1, further comprising a data storage device (33) communicatively coupled to the processor (31), wherein the processor is further configured to:

store the estimated degree of fouling in the data storage device; and
determine a cumulative degree of fouling of the pollutant removal structure (55) from the estimated degrees of fouling stored in the data storage device, each of said degrees of fouling relating to a different operating period of the air purifier (50).

7. The air purifier monitoring system (10) of claim 6, wherein the processor (31) is further configured to adjust the performance characteristics of the pollutant removal structure (55) based on the determined cumulative degree of fouling of the pollutant removal structure.

8. The air purifier monitoring system (10) of claim 6, further comprising a display device (35) communicatively coupled to the processor (31), wherein the processor is further configured to:

generate information relating to the performance of the pollutant removal structure (55) from at least one of said estimated degrees of fouling; and
operate the display device to display said generated information.

9. The air purifier monitoring system (10) of claim 8, wherein the information relating to the performance of the pollutant removal structure (55) comprises an end-of-life indication for the pollutant removal structure.

10. The air purifier monitoring system (10) of claim 1, further comprising the pollutant sensor (21) and the $CO_2$ sensor (23).

11. The air purifier monitoring system (10) of claim 1, wherein the pollutant is particulate matter, toluene or formaldehyde.

12. An air purifier system comprising an air purifier (50) including a pollutant removal structure (55) and the air purifier monitoring system (10) of claim 1.

13. A method (100) of monitoring a pollutant removal performance of a pollutant removal structure (55) of an air purifier (50) located in an air-filled space, the method comprising:

providing performance characteristics of the pollutant removal structure;
providing a plurality of algorithms for estimating a degree of fouling of the pollutant removal structure during an operating period of the air purifier, each of said algorithms being valid for a particular ventilation condition of the air-filled space;
receiving a series of $CO_2$ levels detected over a period of time in said air-filled space;
estimating an actual ventilation condition of the air-filled space from the received series of $CO_2$ levels;
selecting an algorithm from the plurality of algorithms based on the estimated actual ventilation condition;
receiving a series of pollutant levels detected over the operating period in the air-filled space; and
estimating the degree of fouling of the pollutant removal structure during the operating period using the selected algorithm and the performance characteristics of the pollutant removal structure.

14. The method (100) of claim 13, wherein the plurality of algorithms includes a first algorithm defined to estimate said degree of fouling based on a difference between the pollutant level within the air-filled space and an ambient pollutant level of said pollutant in a region in which the air-filled space is located and a second algorithm defined to estimate said degree of fouling independent of the ambient pollutant level of said pollutant, the method further comprising:

receiving said ambient pollutant level from a data source for providing said ambient pollutant level; and
selecting the first algorithm if a ventilation rate of the air-filled room is below a defined threshold and selecting the second algorithm if said ventilation rate at least meets the defined threshold.

15. The method (100) of claim 13, further comprising:

storing the estimated degree of fouling;
determining a cumulative degree of fouling of the pollutant removal structure from previously stored estimated degrees of fouling, each of said degrees of fouling relating to a different operating period of the air purifier (50); and generating an end-of-life indication for the pollutant removal structure (55) from the determined cumulative degree of fouling.

10

**FIG. 1**

FIG. 2

**FIG. 3**

100

**FIG. 4**

**FIG. 5**

**FIG. 6**

$y = -2E-05x + 0.9695$
$R^2 = 0.9986$

**FIG. 7**

**FIG. 8**

Europäisches
Patentamt

European
Patent Office

Office européen
des brevets

**EUROPEAN SEARCH REPORT**

Application Number

EP 17 17 6895

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2016/102521 A1 (KONINKL PHILIPS NV [NL]) 30 June 2016 (2016-06-30) * page 10, line 12 - page 11, line 4; figure 1 * * page 4, line 3 - page 4, line 25 * ----- | 1-15 | INV. F24F11/39 ADD. F24F3/16 |
| A | CN 102 353 751 A (BEIJING SHIKUN ENVIRONMENTAL TECHNOLOGY CO LTD) 15 February 2012 (2012-02-15) * abstract * ----- | 1-15 | |

TECHNICAL FIELDS
SEARCHED      (IPC)

F24F
B01D

The present search report has been drawn up for all claims

| Place of search | Date of completion of the search | Examiner |
|---|---|---|
| Munich | 10 January 2018 | Anconetani, Mirco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 6895

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2018

| Patent document cited in search report | | Publication date | Patent family member(s) | | Publication date |
|---|---|---|---|---|---|
| WO 2016102521 | A1 | 30-06-2016 | CN | 107110531 A | 29-08-2017 |
| | | | EP | 3237808 A1 | 01-11-2017 |
| | | | US | 2017350611 A1 | 07-12-2017 |
| | | | WO | 2016102521 A1 | 30-06-2016 |
| CN 102353751 | A | 15-02-2012 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160209316 A1